# EUROPEAN PATENT APPLICATION

(11) **EP 3 190 824 A1**
(43) Date of publication of application: **12.07.2017**
(21) Application number: 15837860.4
(22) Date of filing: 01.09.2015
(51) Int. Cl.: H04W 28/18, H04W 80/10

(54) **RADIO COMMUNICATION SYSTEM, BASE STATION, USER DEVICE, COMMUNICATION METHOD, AND STORAGE MEDIUM**

(30) Priority: 03.09.2014 JP 2014179454
(71) Applicant: NEC Corporation, Tokyo 108-8001 (JP)
(72) Inventor: SAKAI, Toshiki, Tokyo 108-8001 (JP)
(74) Representative: MacDougall, Alan John Shaw
(86) International application number: PCT/JP2015/004436
(87) International publication number: WO 2016/035326

(57) **Abstract**

The exemplary embodiments enables flexible audio services to be provided in a radio communication system in which a base station is shared by a plurality of communication providers. A radio communication system includes: a first user equipment configured to store information for identifying a first communication operator for a first communication; a second user equipment configured to store information for identifying a second communication operator for a second communication; and a base station. The base station is configured to execute the first communication and the second communication, measure a radio resource used in the base station, compare, when the radio resource exceeds a predetermined threshold value, a control level of the base station with at least one of a control level of the first communication or a control level of the second communication. The base station controls, based on a result of the comparison, an audio encoding rate related to at least one of the first communication or the second communication.

## Description

### Technical Field

The present invention relates to a radio communication system, a base station, a user equipment, a communication method, and a storage medium.

### Background Art

In the 3GPP (Third Generation Partnership Project) for 3G mobile communication systems, LTE (Long Term Evolution) and LTE-Advanced are being studied.

Further, according to PTL 1, as one operator that provides mobile communication services, an MVNO (Mobile Virtual Network Operator) is known. The MVNO borrows a mobile line network from an MNO (Mobile Network Operator) that possesses a physical mobile line network and thereby provides mobile communication services.

Further, as a mode where a plurality of MNOs share a base station, an MOCN (Multi-Operator Core Network) is disclosed, for example, in NPL 2.

Further, NPL 1, 3 or 4 discloses control for a rate of audio encoding.

### Citation List

### Patent Literature

PTL 1: Japanese Laid-open Patent Publication No. 2011-44799 Non Patent Literature

NPL 1: TS36.300 (3GPP TS 36.300 V12.2.0 (2014-06), Evolved Universal Terrestrial Radio Access (E-UTRA) and Evolved Universal Terrestrial Radio Access Network (E-UTRAN); Overall description; Stage 2)
NPL 2: TS25.331 (3GPP TS 25.331 V12.2.0 (2014-07), Radio Resource Control (RRC); Protocol specification)
NPL 3: TS 23.401 (3GPP TS 23.401 V12.5.0 (2014-06), General Packet Radio Service (GPRS) enhancements for Evolved Universal Terrestrial Radio Access Network (E-UTRAN) access)
NPL 4: TS 26.114 (3GPP TS 26.114 V12.6.0 (2014-06), IP Multimedia Subsystem (IMS); Multimedia telephony; Media handling and interaction)

### Summary of Invention

### Technical Problem

However, in a case of an MOCN, NPL 1, 3 or 4 does not disclose a specific method for controlling an audio encoding rate for a plurality of communication operators that share a base station. Therefore, in the case of an MOCN, it is difficult to provide a flexible audio service.

Therefore, one object of an exemplary embodiment is to provide, in a radio communication system where a base station is shared by a plurality of communication operators, a radio communication system capable of providing a flexible audio service, a base station, a user equipment, a communication method, and a storage medium. It should be noted that the object is merely one of a plurality of objects intended to be achieved by exemplary embodiments to be disclosed in the present description. Other objects or problems and novel features will be made clear from description of the present description or accompanying drawings.

### Solution to Problem

A radio communication system of the exemplary embodiment includes: a first user equipment that stores information for identifying a first communication operator for a first communication; a second user equipment that stores information for identifying a second communication operator for a second communication; and a base station. The base station executes the first communication and the second communication, measures a radio resource used in the base station, and compares, when the measured radio resource exceeds a predetermined threshold value, a control level of the base station with at least one of a control level of the first communication or a control level of the second communication. The base station is configured to be able to control, on the basis of a result of the comparison, an audio encoding rate related to at least one of the first communication or the second communication.

Further, a base station of the exemplary embodiment is included in a radio communication system. The radio communication system includes: a first user equipment that stores information for identifying a first communication operator for a first communication; and a second user equipment that stores information for identifying a second communication operator for a second communication. The base station includes: a communication unit that executes the first communication and the second communication; and a measurement unit that measures a radio resource used in the communication unit. The base station includes a comparison unit that compares, when the measured radio resource exceeds a predetermined threshold value, a control level of the base station with at least one of a control level of the first communication or a control level of the second communication. The base station includes a control unit configured to be able to control, on the basis of a result of the comparison, an audio encoding rate related to at least one of the first communication or the second communication.

A user equipment of the exemplary embodiment is configured to execute a first communication with a base station. Further, the user equipment includes a memory that stores information for identifying a first communication operator for the first communication. Further, the user equipment includes a communication unit that receives control information of an audio encoding rate included in the first communication, the audio encoding rate being changed on the basis of a result of a comparison where a control level of the base station and a control level of the first communication are compared with each other when a radio resource used in the base station exceeds a predetermined threshold value. Further, the user equipment controls an audio encoding rate of the first communication on the basis of the received control information.

A communication method of the exemplary embodiment is a communication method of a base station of a radio communication system including a first user equipment that stores information for identifying a first communication operator for a first communication and a second user equipment that stores information for identifying a second communication operator for a second communication. Further, the base station executes the first communication and the second communication, measures a radio resource used in the base station, compares, when the measured radio resource exceeds a predetermined threshold value, a control level of the base station with at least one of a control level of the first communication or a control level of the second communication, and controls, on the basis of a result of the comparison, an audio encoding rate related to at least one of the first communication or the second communication.

A storage medium of the exemplary embodiment stores a program for causing a computer to execute a communication method of a base station of a radio communication system including a first user equipment that stores information for identifying a first communication operator for a first communication and a second user equipment that stores information for identifying a second communication operator for a second communication. The program causes the computer to execute a process for executing the first communication and the second communication, a process for measuring a radio resource used in the base station, a process for comparing, when the measured radio resource exceeds a predetermined threshold value, a control level of the base station with at least one of a control level of the first communication or a control level of the second communication, and a process for controlling, on the basis of a result of the comparison, an audio encoding rate related to at least one of the first communication or the second communication.

### Advantageous Effects of Invention

According to the exemplary embodiment of the present invention, it is possible to provide, in a radio communication system where a base station is shared by a plurality of communication operators, a radio communication system capable of providing a flexible audio service, a base station, a user equipment, a communication method, and a storage medium.

### Brief Description of Drawings

[Fig. 1] Fig. 1 is a diagram illustrating a radio communication system of a first exemplary embodiment.
[Fig. 2] Fig. 2 is a diagram illustrating a base station of the first exemplary embodiment.
[Fig. 3] Fig. 3 is a diagram illustrating operations of the first exemplary embodiment.
[Fig. 4] Fig. 4 is a diagram illustrating a user equipment of the first exemplary embodiment.
[Fig. 5] Fig. 5 is a diagram illustrating a radio communication system of a second exemplary embodiment.
[Fig. 6] Fig. 6 is a diagram illustrating a base station of the second exemplary embodiment.
[Fig. 7] Fig. 7 is a diagram illustrating a user equipment of the second exemplary embodiment.
[Fig. 8] Fig. 8 is one example of information registered on the base station in the second exemplary embodiment.
[Fig. 9] Fig. 9 is another example of information registered on the base station in the second exemplary embodiment.
[Fig. 10] Fig. 10 is a diagram illustrating a first operation of the second exemplary embodiment.
[Fig. 11] Fig. 11 is a diagram illustrating a second operation of the second exemplary embodiment.

### Description of Embodiments

Hereinafter, with reference to the accompanying drawings, exemplary embodiments will be described in detail. In the drawings, the same elements or corresponding elements are assigned with the same reference signs, and for description clarification, overlapping description will be omitted, as necessary. A plurality of exemplary embodiments described below may be carried out independently or may be carried out by appropriately combining these exemplary embodiments. In the drawings, the same elements or corresponding elements are assigned with the same reference signs, and for description clarification, overlapping description will be omitted, as necessary.

Further, in the present description and the drawings, a plurality of components including substantially the same functional configuration are discriminated in some cases by being assigned with different alphabetical characters after the same reference sign. A plurality of components including substantially the same functional configuration are discriminated, for example, as in user equipments 1a, 1b, and 1c, as necessary. However, when it is not necessary to discriminate each of a plurality of components including substantially the same functional configuration, only the same reference sign is assigned. When, for example, it is not specifically necessary to discriminate user equipments 1a, 1b, and 1c, a user equipment 1 is simply referred to.

### <First Exemplary Embodiment>

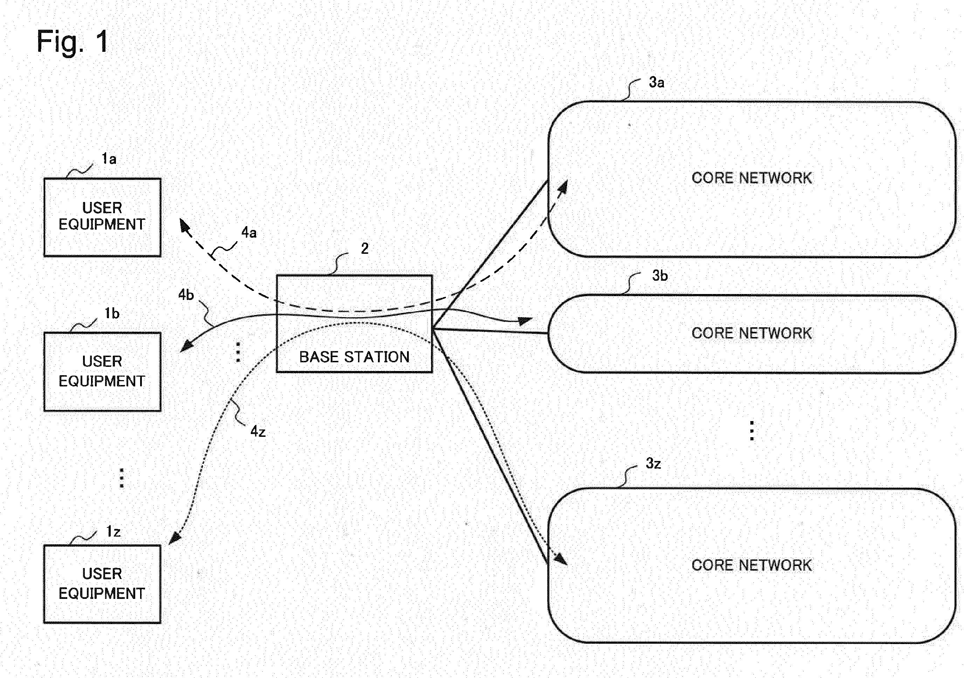

Fig. 1 illustrates a radio communication system of a first exemplary embodiment.

In Fig. 1, the radio communication system of the present exemplary embodiment includes at least one user equipment 1, at least one base station 2, and at least one core networks 3.

In Fig. 1, between a plurality of user equipments 1 and a plurality of core networks 3, a plurality of communications are executed via a plurality of virtual networks 4. For example, a user equipment 1a executes a first communication with a core network 3a via a virtual network 4a. Further, a user equipment 1b executes a second communication with a core network 3b via a virtual network 4b. Further, a user equipment 1z executes a 26th communication with a core network 3z via a virtual network 4z.

The user equipment 1a stores information for identifying a first communication operator for a first communication. The first communication operator relates to the core network 3a. Further, the user equipment 1b stores information for identifying a second communication operator for a second communication. The second communication operator relates to the core network 3b. Further, the user equipment 1z stores information for identifying a 26th communication operator for a 26th communication. The 26th communication operator relates to the core network 3z.

The base station 2 executes the above-described first to 26th communications in the virtual networks 4a to 4z. Further, the base station 2 measures a radio resource used upon communication. When the measured radio resource exceeds a predetermined threshold value, the base station 2 executes comparison processing. The comparison processing refers to processing for comparing a control level of the base station with at least one of a control level of the first communication to a control level of the 26th communication. The base station 2 is configured to be able to control, on the basis of a result of the comparison, an audio encoding rate related to at least one of the first communication to the 26th communication. An upper limit of communications and communication operators of the present exemplary embodiment is not limited to the 26th and may be any number after the 26th.

In the above description and Fig. 1, for description simplification, the user equipment 1, the core network 3, and the virtual network 4 have been associated with each other in a one-on-one manner. A plurality of user equipments 1 may be associated with a single virtual network 4 or a single core network 3. For example, first and second user equipments 1 may communicate with a first core network via one virtual network 4.

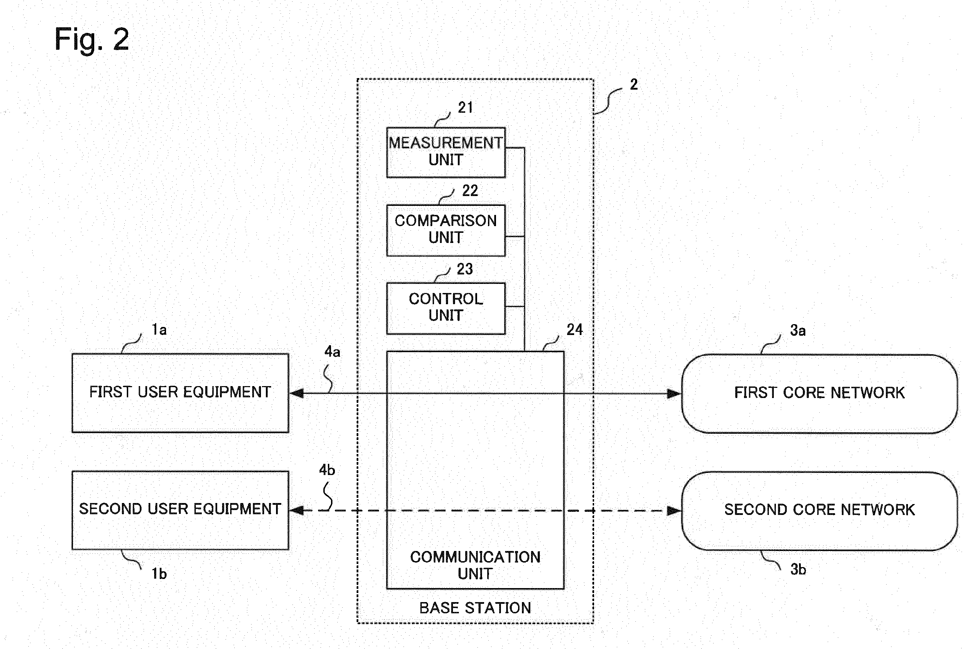

Fig. 2 is a diagram illustrating a base station of the first exemplary embodiment.

In Fig. 2, the base station 2 includes at least a measurement unit 21, a comparison unit 22, a control unit 23, and a communication unit 24. A direction of an arrow in the drawing illustrates one example and does not limit a direction of a signal between blocks.

The communication unit 24 executes a first communication with the first user equipment 1a that stores information for identifying a first communication operator. Further, the communication unit 24 executes a second communication with the second user equipment 1b that stores information for identifying a second communication operator. The first communication is executed via the virtual network 4a. The second communication is executed via the virtual network 4b.

The measurement unit 21 measures a radio resource used in the communication unit 24.

The comparison unit 22 compares, when the measured radio resource exceeds a predetermined threshold value, a control level of the base station with at least one of a control level of the first communication or a control level of the second communication.

The control unit 23 is configured to be able to control, on the basis of a result of the comparison in the comparison unit 22, an audio encoding rate related to the first communication or the second communication. It is possible to cause the control unit 23 not to control an audio encoding rate by adjusting setting of a control level value of the base station, a control level of the first communication, or a control level of the second communication.

For description simplification, in Fig. 2, only two user equipments 1a and 2b, two core networks 3a and 3b, and two virtual networks 4a and 4b are illustrated. This is merely one example, and the base station according to the present exemplary embodiment is not limited to this example.

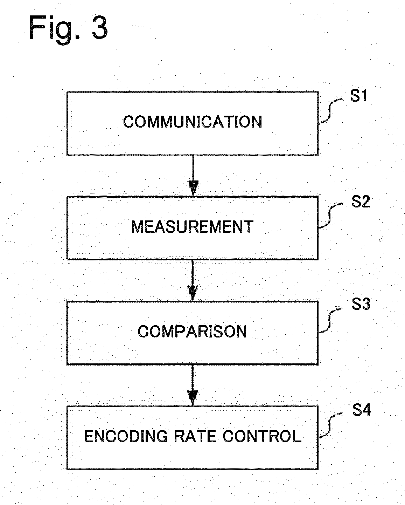

Fig. 3 illustrates operations of the first exemplary embodiment.

In S1, the base station 2 executes a first communication with the first user equipment 1a that stores information for identifying a first communication operator. Further, the base station 2 executes a second communication with the second user equipment 1b that stores information for identifying a second communication operator. The first communication is executed via the virtual network 4a. The second communication is executed via the virtual network 4b.

In S2, the base station 2 measures a radio resource used in the base station.

In S3, the base station 2 compares, when the measured radio resource exceeds a predetermined threshold value, a control level of the base station with at least one of a control level of the first communication or a control level of the second communication.

In S4, the base station 2 controls, on the basis of a result of the comparison, an audio encoding rate related to at least one of the first communication or the second communication. It is possible to cause the base station 2 not to control an audio encoding rate by adjusting setting of a control level value of the base station, a control level of the first communication, or a control level of the second communication.

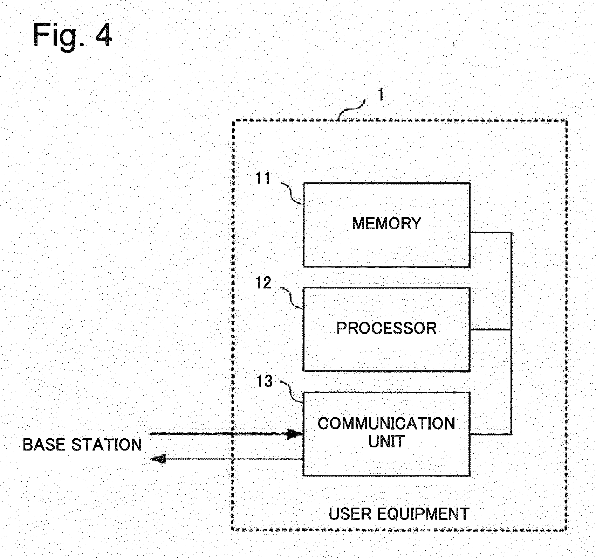

Fig. 4 illustrates a user equipment of the first exemplary embodiment.

In Fig. 4, a user equipment 1 includes a memory 11, a processor 12, and a communication unit 13. A direction of an arrow in the drawing illustrates one example and does not limit a direction of a signal between blocks.

The memory 11 stores (referred to also as records or registers) information for identifying a first communication operator for the first communication.

The communication unit 13 is configured to execute a first communication with the base station 2 via the virtual network 4. Further, the communication unit 13 receives control information of an audio encoding rate included in the first communication, the audio encoding rate being changed on the basis of a result of a comparison where a control level of the base station and a control level of the first communication are compared with each other when a radio resource used in the base station 2 exceeds a predetermined threshold value.

The processor 12 controls the audio encoding rate of the first communication on the basis of the received control information.

According to the present exemplary embodiment, it is possible to control an audio encoding rate where in one base station, a plurality of virtual networks are considered.

### <Second Exemplary Embodiment>

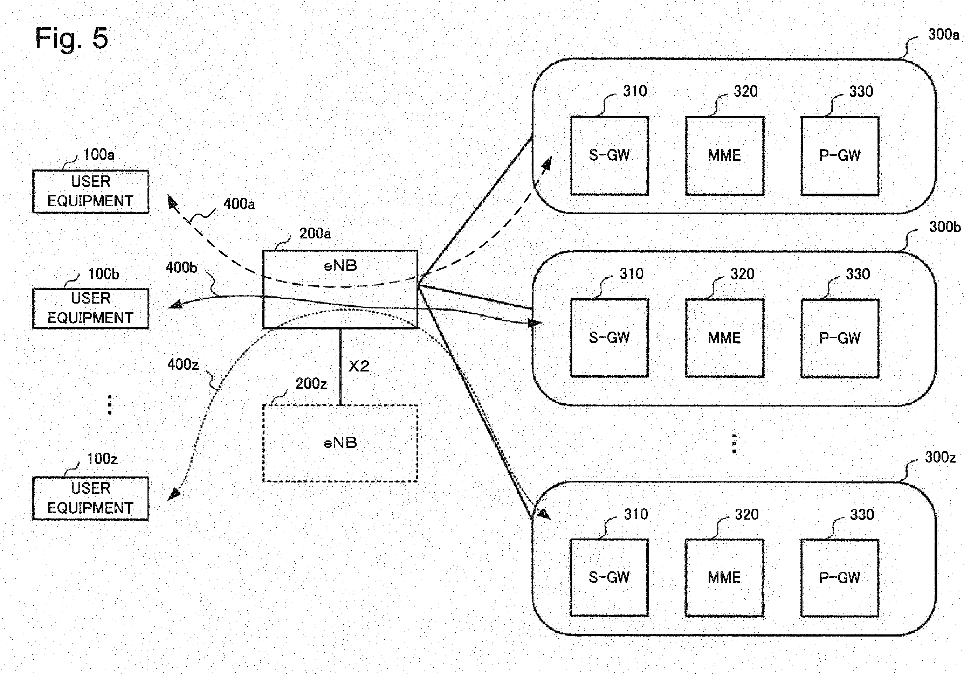

Fig. 5 illustrates a radio communication system of a second exemplary embodiment. More specifically, an entire configuration of an LTE system that realizes an MOCN (Multi-Operator Core Network) is illustrated as one example.

In Fig. 5, the radio communication system includes at least one user equipment 100, at least one base station 200, and at least one core network 300.

In Fig. 5, between a plurality of user equipments 100 and a plurality of core networks 300, a plurality of communications are executed via a plurality of virtual networks 400. For example, a user equipment 100a executes a first communication with a core network 300a via a virtual network 400a. Further, a user equipment 100b executes a second communication with a core network 300b via a virtual network 400b. Further, a user equipment 100z executes a 26th communication with a core network 300z via a virtual network 400z.

The user equipment 100 is user equipment (UE) related to LTE. The user equipment 100a stores information for identifying a first communication operator for a first communication. The first communication operator relates to the core network 300a. Further, the user equipment 100b stores information for identifying a second communication operator for a second communication. The second communication operator relates to the core network 300b. Further, the user equipment 100z stores information for identifying a 26th communication operator for a 26th communication. The 26th communication operator relates to the core network 300z.

The base station 200 is a base station (eNB or eNodeB (evolved Node B)) related to LTE.

The core network 300 is a next-generation mobile core network (EPC (Evolved Packet Core)) that realizes an ALL-IP (Internet Protocol) network. The core network 300 includes an MME (Mobility Management Entity) 320 as a control function unit. Further, the core network 300 includes an S-GW (Serving Gate Way) 310 as a data function unit. Further, the core network 300 includes a P-GW (PDN (Packet Data Network) Gate Way) 330 as an interface with an external packet network.

An interface between the eNB that is the base station 200 and the MME 320 or the S-GW 310 of the core network 300 is an S1 interface. An interface between the eNB and an adjacent eNB is an X2 interface.

The communication between the user equipment 100 and the core network 300 via the virtual network 400 is an audio communication. This example is VoLTE (Voice over LTE) that is a system for realizing an audio communication by VoIP (Voice over IP) using a network of LTE.

In Fig. 5, the core networks 300a to 300z are illustrated separately from each other. The networks 300 does not always need to be separated from each other and may be virtually separated from each other, for example, on the basis of software control. For example, a plurality of operators may physically share one core network.

The base station 200 includes hardware and software for executing transmission/reception control for a radio signal and a function (i.e. virtual network function) for operating a plurality of networks in one physical base station 200. The base station 200 includes a radio interface function and a wired interface function for executing transmission/reception of a radio signal and a wired signal, respectively. Using these functions, the base station 200 relays a data communication between the user equipment 100 and the core network 300. The base station 200 operated using the virtual network function may accommodate a UE that subscribes to a previously set MNO or MVNO and provide a communication service with a core network for the MNO or MVNO designated by the UE, respectively.

Further, a user apparatus (UE) that is a subscriber terminal subscribes to a predetermined base station 200. The base station 200 reports a PLMN (Public Land Mobile Network)-ID that is a selection target of the subscriber terminal. The UE subscribes to the base station 200 and thereby is connected to a virtual network associated with the PLMN-ID. The user apparatus (UE) communicates with the core network 300 through a VLAN (Virtual LAN) having a tag ID previously allocated to each virtual network.

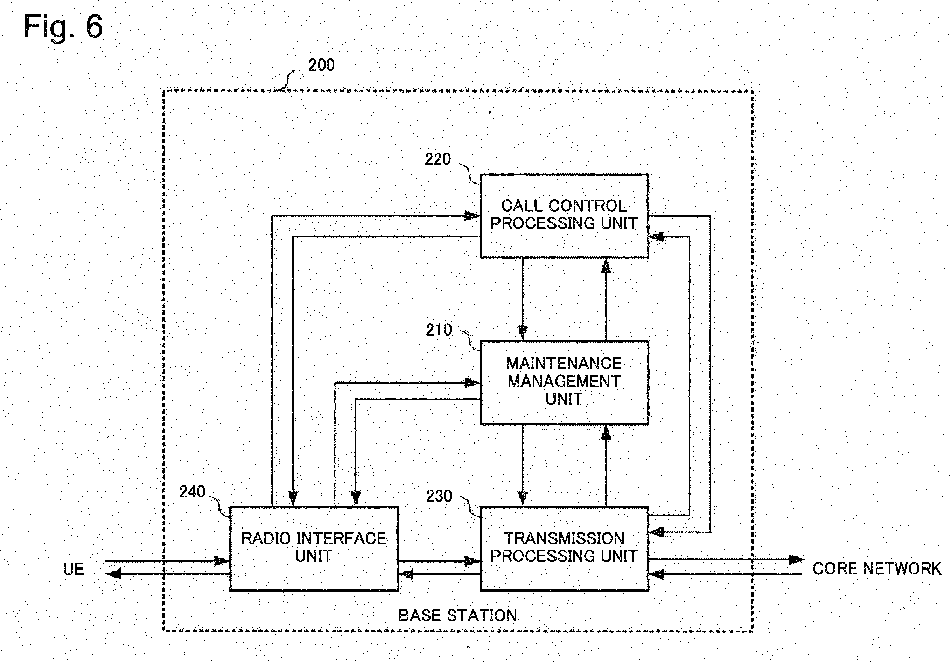

Fig. 6 illustrates a base station of the second exemplary embodiment.

The base station of the present exemplary embodiment includes an MOCN function capable of accommodating terminals for a plurality of communication operators. Further, the base station belongs to a radio communication system that provides a VoLTE service.

In the present exemplary embodiment, respective levels (indexes) for control corresponding to a radio resource of a physical base station 200 (referred to also as a radio resource used in the base station 200) and a virtual network for each communication operator (referred to also as an operator) accommodated by the base station 200 are provided.

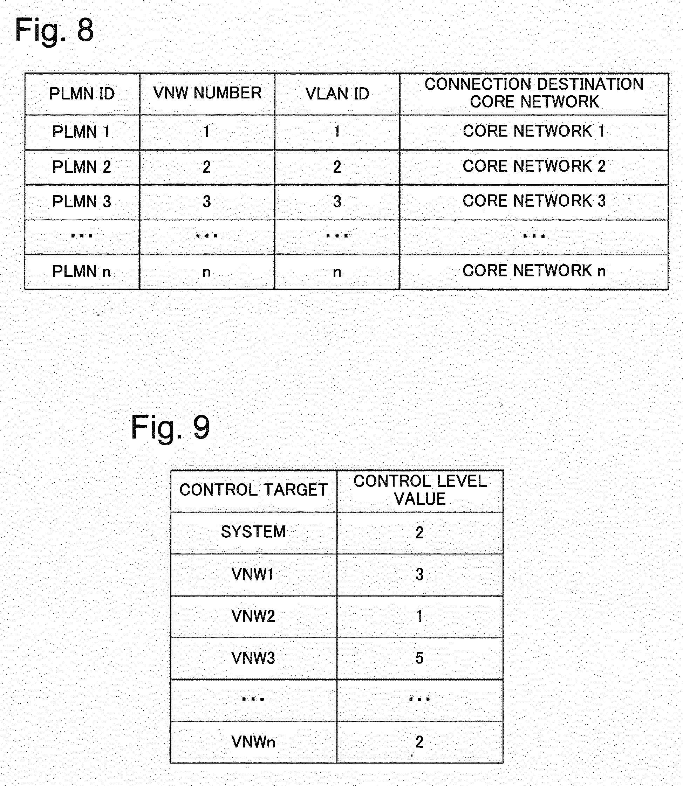

Fig. 9 illustrates a control level value registered in the base station in the second exemplary embodiment. Referring to Fig. 9, a control level value (a control level value of a system) as a radio resource of a physical base station 200 is set as "2." As a control level value defined for each virtual network, for a VNW (Virtual Network) 1, a VNW 2, a VNW 3, and, a VNW n, "3," "1," "5," and "2" are set respectively.

A control level value of the system and a control level value (virtual level value) defined for each virtual network are compared, and thereby it is possible to execute control of an audio encoding rate in one physical base station 200 for each accommodated communication operator (each virtual network 400).

More specifically, in the base station 200 of the present exemplary embodiment, a control level value of a system changeable during operation (during communication) and a virtual level value set (defined) for each communication operator accommodated by the base station 200 are set. A control level value of the system and a control level value defined for each virtual network are compared, and thereby ECN (Explicit Congestion Notification) control at a granularity of an operator unit is made easy.

The ECN represents a predetermined field in an IP datagram transmitted/received, for example, in the user equipment 100 or the base station 200 in the radio communication system of the present exemplary embodiment. In control of the ECN, an ECN field of an IP packet header of an IP datagram related to audio data is rewritten from "10" indicating ECT(0) of ECT (ECN-Capable Transport) to "11" indicating CE (Congestion Experienced). By this rewrite, an audio encoding rate is adaptively controlled during communication of VoIP in accordance with radio quality (a situation of a radio resource) and a degree of congestion.

In Fig. 6, the base station 200 of the present exemplary embodiment includes at least a maintenance management unit 210, a call control processing unit 220, a transmission processing unit 230, and a radio interface unit 240. A direction of an arrow in the drawing illustrates one example and does not limit a direction of a signal between blocks.

The maintenance management unit 210 receives a command for monitoring control from an operator and processes the command. Further, the maintenance management unit 210 is configured to be able to execute the following setting processing for the transmission processing unit 230.
(1) Setting for a system control level value as an entire eNB and a control level value for each virtual network
(2) Setting for an association between a PLMN-ID and a virtual network
(3) Setting for an association between a VLAN-ID and a virtual network Further, the maintenance management unit 210 is configured to be able to set a call-connectable PLMN-ID for the call control processing unit 220. Further, the maintenance management unit 210 is configured to be able to execute information acquisition (or referred to also as measurement) of a radio resource usage situation used in the base station 200 from the radio interface unit 240. This information acquisition may be executed in a predetermined period or may be executed on the basis of a predetermined trigger. The maintenance management unit 210 is configured to able to report (or referred to also as outputs or transmits) an ECN initiation control request that is a request for initiating control of an ECN or an ECN control stop request that is a request for stopping ECN control to the transmission processing unit 230 on the basis of the information acquired by the information acquisition. A method for determining an initiation or stop of ECN control in accordance with information of a radio resource usage situation is not specifically limited. In the present exemplary embodiment, for example, an average value of radio resource usages used for allocating a radio resource by the base station in a certain time unit is compared with threshold values of two types of a predetermined ECN control initiation value and a predetermined ECN control stop value. An initiation or stop of ECN control may be determined on the basis of this comparison.

The call control processing unit 220 executes call control. Specifically, the call control processing unit 220 reports a PLMN-ID accommodatable by the base station set by the maintenance management unit 210 into a cell via a radio interface. The call control processing 220 executes, on the basis of the PLMN-ID, call control processing for a terminal that makes a call connection request, via the core network 300 and the transmission processing unit 230.

During call connection processing, the call control processing unit 220 is configured to be able to execute the following.
1) When receiving an eNB-SGW section setting request from the core network 300, the call control processing unit 220 sets a tunnel (e.g. GTP (GPRS (General Packet Radio Service) Tunneling Protocol) tunnel) that transports user data between the core network 300 and the base station 200.
2) The call control processing unit 220 acquires an RB (Radio Bearer)-ID for identifying a data path for identifying and transporting user data in association with the tunnel between a UE (the user equipment 100) and an eNB (the base station 200). The RB-ID is numbered (generated) in the call control processing unit 220.
3) The call control processing unit 220 transmits a radio data link setting request to the radio interface unit 240.
4) The call control processing unit 220 transmits a data path setting request to the transmission processing unit 230.
5) The call control processing unit 220 establishes a pathway for transporting user data of the UE inside the eNB.
6) An eNB-SGW section setting completion notification is transmitted to the core network 300.

The transmission processing unit 230 transmits/receives control data and user data between itself and the core network 300. Further, the transmission processing unit 230 executes protocol processing of each layer conforming to 3GPP specification. Further, the transmission processing unit 230 exchanges control data or user data with the call control processing unit 220 and the core network 300, respectively. When receiving a data path establishment request from the call control processing unit 220, the transmission processing unit 230 creates a data path. The data path request includes a PLMN-ID. The transmission processing unit 230 sets a VLAN ID and an RB-ID associated with the received PLMN-ID in association with each other.

Further, during communication, the transmission processing unit 230 holds an ECN control state. When receiving an ECN control initiation request from the maintenance management unit 210, the transmission processing unit 230 determines that the ECN control state is valid. On the basis of this determination, a control level value (system control level value) of the entire base station and a level value of each virtual network are compared with each other, and ECN control is executed. Further, when receiving an ECN control stop request, the transmission processing unit 230 determines that the ECN control state is invalid and stops the ECN control.

Ranges of a system control level value of the entire base station and a control level value defined for each virtual network (a control level value of each virtual network) and a method of determination whether to execute the ECN control are not specifically limited. One example of these is listed below.
- Range of a control level value: 1 to 5 (see Fig. 9)
- Determination conditions:
   When (a control level value of each virtual network)≥(a system control level value), a determination as permission is executed.
   When (a control level value of each virtual network)<(a system control level value), a determination as non-permission is executed.

The radio interface unit 240 transmits/receives a radio signal between itself and a UE in conformity to 3GPP specifications. Further, the radio interface unit 240 controls a radio resource necessary for transmission/reception. The radio interface unit 240 converts a radio signal (control data or user data) exchanged with the user equipment 100 (UE) to a baseband signal and exchanges (or referred to also as inputs/outputs) the converted signal with the call control processing unit 220 and the transmission processing unit 230. The radio interface unit 240 periodically collects (referred to also as measures) a usage situation of a radio resource in the base station 200 and transmits the collected situation to the maintenance management unit 210.

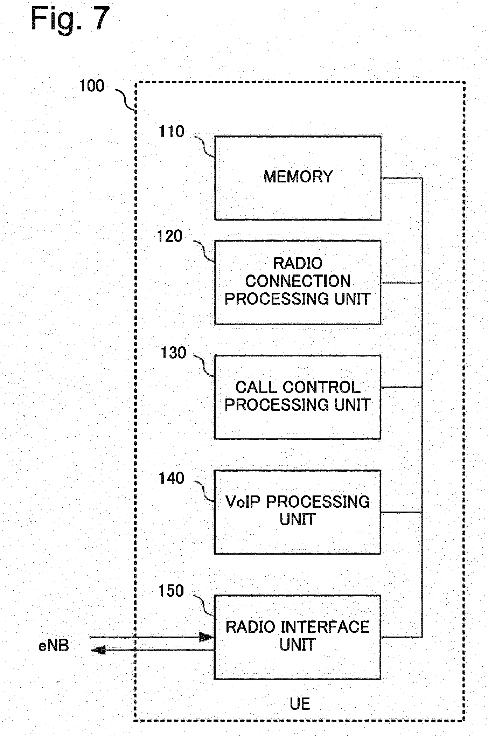

Fig. 7 illustrates a user equipment of the second exemplary embodiment.

In Fig. 7, the user equipment 100 includes a memory 110, a radio connection processing unit 120, a call control processing unit 130, a VoIP processing unit 140, and a radio interface unit 150. The user equipment 100 is configured to be connectable (referred to also as subscribable) to the base station 200 when located in a cell of the base station 200. A direction of an arrow in the drawing illustrates one example and does not limit a direction of a signal between blocks.

In the memory 110, a PLMN-ID for identifying a connection target of the user equipment 100 is previously set (referred to also as stored).

The radio connection processing unit 120 executes processing necessary for radio connection to the base station 200. The call control processing unit 130 executes radio connection processing in cooperation with other function units. The VoIP processing unit 140 processes an audio signal exchanged with the base station 200. The radio interface unit 150 communicably connects the base station 200 and the user equipment 100.

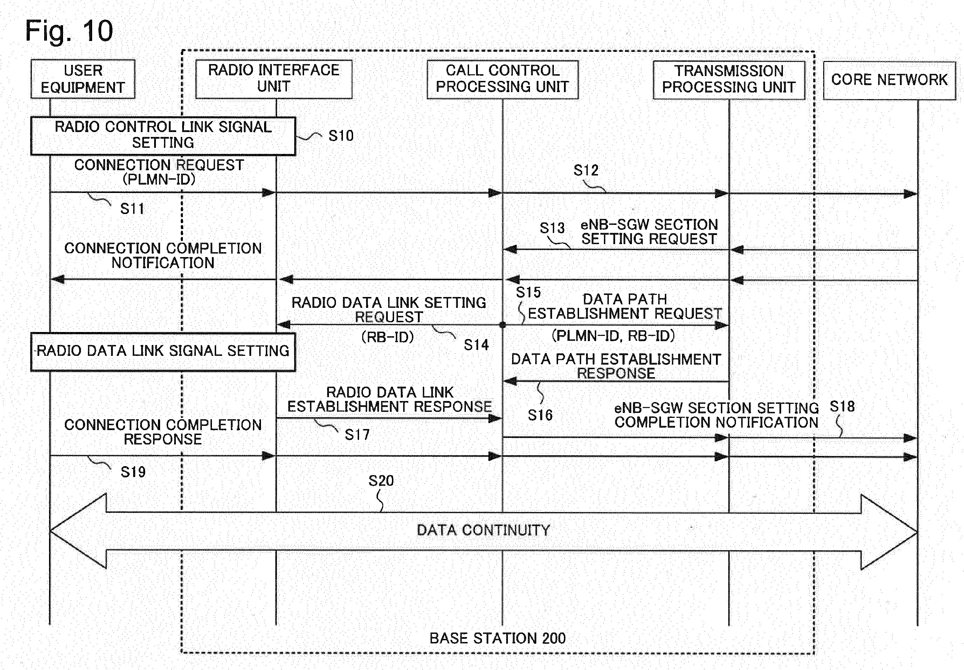

Fig. 10 illustrates a first operation of the second exemplary embodiment.

In Fig. 10, an operation example from reception by the base station 200 of a call connection request for connecting a call from the user equipment 100 to data continuity is illustrated.

First, in the call control processing unit 220 of the base station 200, a PLMN-ID included in reporting information, illustrated in Fig. 8, reported into a cell of the base station 200 is previously set. Further, in the transmission processing unit 230, information of a PLMN-ID of a reporting target included in the reporting information illustrated in Fig. 8, a number (VNW number) for identifying the virtual network 400, and a VLAN ID corresponding to the VNW number is previously set. Further, a system control level value of the base station 200 and a control level value of each VNW illustrated in Fig. 9 are registered (set). This registration is made on the call control processing unit 220 and the transmission processing unit 230 of the base station 200 through the maintenance management unit 210 from an operator (communication operator). When the base station 200 is initiated, the transmission processing unit 230 is previously subjected to pre-processing for communication by a VLAN using a VLAN ID illustrated in Fig. 8.

In S10, setting processing for a radio control link is executed.

In S11, the user equipment 100 detected as a selection target transmits, as a connection request, "PLMN 1" (see Fig. 8) that is one PLMN-ID reported by the base station 200 to the base station 200.

In S12, the call control processing unit 220 of the base station 200 executes call control processing conforming to 3GPP specifications between itself and the core network 300. Specifically, the call control processing unit 220 receives information including a fact that the PLMN-ID is "PLMN 1" from the radio interface unit 240. When the received information of "PLMN 1" is transmitted to the transmission processing unit 230, the call control processing unit 200 identifies the core network 300 to be a call connection destination. According to the example of Fig. 8, the identified core network is "core network 1." In this case, in the base station 200, the virtual network 400 corresponding to "1" as a VNW number is associated with the user equipment 100, and a VLAN having "1" as a VLAN ID is used (i.e. VNW "1" and VLAN ID "1" are associated with each other).

In call connection processing for connecting a call, the following operations are executed.

In S13, the core network 300 transmits an eNB-SGW section setting request. The call control processing unit 220 acquires an RB-ID from the received eNB-SGW section setting request. A connection completion notification is transmitted to the user equipment 100 having made the connection request of S11. This may cause the user equipment 100 to recognize the connection completion.

Further, in S14, the call control processing unit 220 transmits a radio data link setting request to the radio interface unit 240.

Further, in S15, the call control processing unit 220 transmits, to the transmission processing unit 230, a data path establishment request including the information of PLMN "1" selected by the user equipment 100 having transmitted the connection request. In Fig. 10, S14 and S15 are executed at the same time, but timings of S14 and S15 may be the same time or different times.

A radio data link establishment response (S17) and a data path establishment response (S16) are caused to respond to the requests of S14 and S15, respectively. As a result, a data path is established between the radio interface unit 240 and the transmission processing unit 230. This data path is a pathway for transporting user data of the user equipment 100 and is identified by the received RB-ID. Further, the transmission processing unit 230 establishes a tunnel (e.g. a GTP tunnel) for transporting the user data of the user equipment 100 between itself and the core network 300.

In S18, the transmission processing unit 230 transmits an eNB-SGW section setting completion notification to the core network 300.

By the above processing, a pathway (referred to also as a path or a route) for transporting user data is established between the core network 300 and the base station 200.

In S19, after a connection completion response is transmitted from the user equipment 100, data continuity between the user equipment 100 and the core network 300 (data communication between the user equipment 100 and the core network 300) becomes possible (S20).

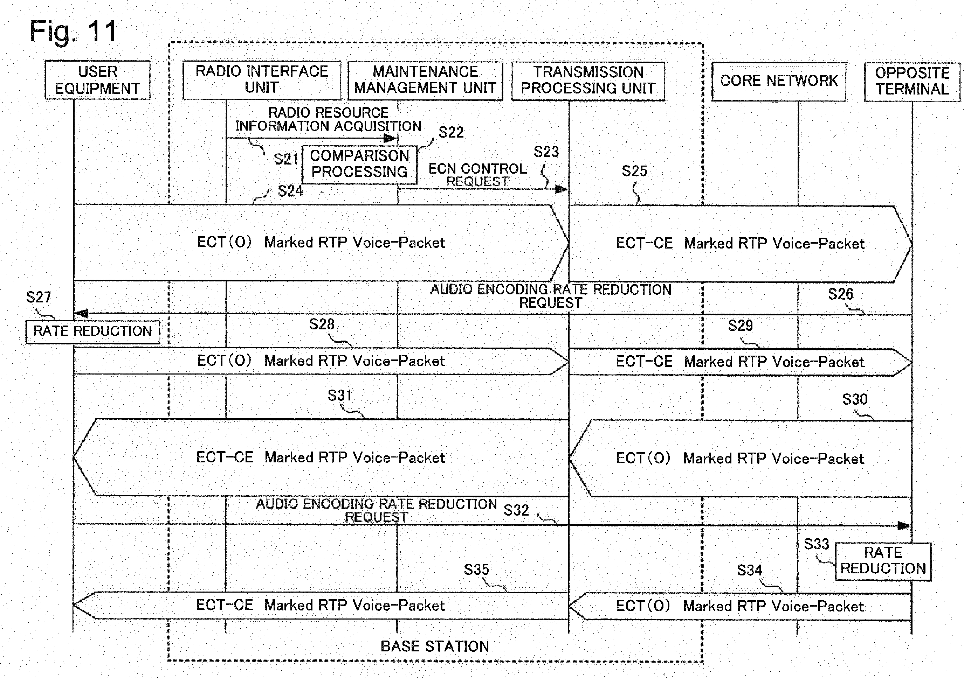

Fig. 11 illustrates a second operation of the second exemplary embodiment.

In Fig. 11, after the data continuity is established in S20, during VoLTE communication of the user equipment, ECN control is executed in accordance with a usage situation of a radio resource. The present example illustrates an operation for reducing an audio encoding rate of VoLTE communication of the user equipment as a result of the ECN control execution.

In S21, the maintenance management unit 210 of the base station 200 acquires a radio resource usage situation per unit time from the radio interface unit 240. This acquisition may be executed periodically or at any timing on the basis of a predetermined trigger.

In S22, the maintenance management unit 210 compares (executes comparison processing between) the acquired radio resource usage situation (e.g. an average value of radio resource usages per unit time) and a predetermined threshold value.

In S23, as a result of the comparison in S22, when the radio resource usage situation exceeds the threshold value, the maintenance management unit 210 transmits an ECN control request to the transmission processing unit 230. The transmission processing unit 230 having received the ECN control request moves to an ECN control valid state.

Further, the transmission processing unit 230 determines what virtual network (VNW) is caused to be a control target in accordance with the table of Fig. 9. When moving to the ECN control valid state, the transmission processing unit 230 executes ECN control for user data of VoLTE accommodated in a virtual network to be a control target.

In the example of Fig. 9, it is assumed that, for example, when (a control level value of each virtual network)≥(a system control level value), a determination as an execution target is executed, and when (a control level value of each virtual network)<(a system control level value), a determination as a non-execution target is executed. In this example, VNW 1, VNW 3, and VNW n are execution targets of ECN control. Therefore, for example, ECN control is executed for user data of VoLTE of the user equipment 100 communicating in VNW 1.

According to the present exemplary embodiment, it has been illustrated that ECN control is executed for VNW 1, VNW 3, and VNW n. This is one example, and by adjusting setting for a control level value, it is possible for ECN control not to be executed. When, for example, a system control level is set as "0," it is possible for ECN control not to be executed in any VNW.

As a result, an audio encoding rate of VoLTE communication between the user equipment 100 and an opposite terminal is reduced. With reference to Fig. 11, a specific example will be described.

In S24, it is assumed that a subscribed user equipment uses a VoLTE service and an ECN field of an IP datagram for transporting an audio thereof is "10" indicating ECT(0) of ECT (ECN-Capable Transport). In this case, when a decrease in quality or an increase in congestion of a radio link occurs, the base station 200 rewrites the ECN field of the IP datagram for transporting audio data of the user equipment to "11" indicating CE (Congestion Experienced) (S25).

As a result, in S26, a request for a VoLTE audio encoding rate being used in communication by the corresponding UE is transmitted from a corresponding terminal to the user equipment.

In S27, the user equipment reduces the VoLTE audio encoding rate.

As a result, in S28 and S29, at the reduced VoLTE audio encoding rate, VoLTE communication of the user equipment is executed. In this manner, a reduction of the VoLTE audio encoding rate being used in communication by the corresponding user equipment is induced by control for rewriting the ECN field.

Further, also for downlink communication, the same description is made.

In S30, it is assumed that an ECN field of an audio IP datagram of a downlink is "10" indicating ECT(0) of ECT (ECN-Capable Transport). In this case, when a decrease in quality or an increase in congestion of a radio link occurs, the base station 200 rewrites the ECN field of an IP datagram for transporting audio data of the user equipment to "11" indicating CE (Congestion Experienced) (S31).

As a result, in S32, a request for a VoLTE audio encoding rate being used in communication by the corresponding UE is transmitted from the user equipment to a corresponding terminal.

In S33, the user equipment reduces the VoLTE audio encoding rate. As a result, in S34 and S35, at the reduced VoLTE audio encoding rate, VoLTE communication of the user equipment is executed. When receiving an ECN control stop request after reception of the ECN control request of S23, the transmission processing unit 230 determines an ECN control state as being invalid and stops the ECN control. In a period from reception of the ECN control request to reception of the ECN stop request, rewrite control for the ECN is executed.

As described above, according to the present exemplary embodiment, it is possible to control an audio encoding rate in VoLTE communication by ECN control where in one base station, a plurality of virtual networks are considered. As a result, one base station may flexibly provide a VoLTE service.

Further, it is assumed that a situation where quality levels of a VoLTE service of a certain operator and a VoLTE service of another operator are desired to be discriminated in accordance with a situation has occurred. When, for example, a radio resource amount used in a base station has been tight, instead of decreasing an audio quality level of a VoLTE service of a certain operator, a flexible operation such as low setting of a base station usage charge for the operator and the like becomes possible.

Further, when audio encoding rate control is merely applied to a base station that realizes an MOCN, quality levels of audio communication services of a plurality of operators are singly handled, and therefore it is difficult to operate a flexible audio communication service. On the other hand, according to the above-described exemplary embodiments, an audio encoding rate may be flexibly controlled by ECN control.

### <Other Exemplary Embodiments>

The above-described radio resource refers to a resource of a predetermined unit formed by frequency, time, code, power, or the like and is used in radio communication. For example, in the case of LTE, a Resource Block separated into a predetermined unit by a frequency and a time allocated to a communication of a user equipment is represented. For a user equipment communicating with a base station, a scheduler of the base station executes a radio resource allocation addressed to the user equipment. The measurement unit 21, for example, may measure an allocation situation of radio resources for all user equipments that execute communications at every unit time and record the measured value. Further, this record may be made in a user equipment unit or a virtual network unit.

The above-described control level may be changed during VoLTE communication (system operation). For example, on the basis of an operation state of a base station or a time zone, a system control level or a control level of each virtual network may be changed. Therefore, it becomes possible to execute a flexible VoLTE communication in accordance with a communication environment.

A determination whether to execute the ECN control is executed at a plurality of times.

A radio communication system that is a target of the above-described exemplary embodiments is applicable to 3GPP LTE (Long Term Evolution), 3GPP W-CDMA (Wideband Code Division Multiple Access), GSM (a registered trademark) (Global System for Mobile communications), WiMAX (Worldwide interoperability for Microwave Access), and the like but is not limited thereto.

Further, regarding several exemplary embodiments, a user equipment (UE) will be described in the present description. The user equipment may be referred to also as a user terminal and may include a part or the whole of functionality of a system, a subscriber unit, a subscriber station, a mobile station, a wireless terminal, a mobile device, a node, a device, a remote station, a remote terminal, a terminal, a wireless communication device, a wireless communication device, a wireless commination apparatus, or a user agent. The user equipment may be another processing device communicating via a cellular phone, a codeless phone, a session initiation protocol (SIP) phone, a smartphone, a wireless local loop (WLL) station, a personal digital assistant (PDA), a laptop, a tablet, a net book, a smart book, a handheld communication device, a handheld computing device, a satellite radio channel, a wireless modem card, and/or a wireless system.

Further, regarding various modes, a base station will be described in the present description. The base station is usable for communication with one or a plurality of wireless terminals and may include a part or the whole of functionality of an access point, a node, an evolved Node B (eNB), or any other network entity. The base station communicates with a UE via an air interface. This communication may occur through one or a plurality of sectors. The base station converts a received air interface frame to an IP packet and thereby may act as a router between the UE and a remaining part of an access network that may include an internet protocol (IP) network. The base station may adjust management of an attribute for an air interface and may be a gateway between a wired network and a wireless network.

Further, the above-described radio communication system and radio communication terminal may be realized by hardware, software, or a combination thereof. Further, a control method for the communication system may be also realized by hardware, software, or a combination thereof. The realization using software means a realization through reading and execution of a program by a computer.

The program is stored (memorized) using various types of non-transitory computer readable media and may be supplied to a computer. The non-transitory computer readable medium includes various types of tangible storage media. Examples of the non-transitory computer readable medium include a magnetic recording medium (e.g. a flexible disk, a magnetic tape, and a hard disk drive), a magneto-optical recording medium (e.g. a magneto-optical disk), a CD-ROM (Compact Disc-Read Only Memory), a CD-R (Compact Disc-Recordable), a CD-R/W (Compact Disc-Rewritable), a DVD-ROM (Digital Versatile Disc-ROM), a DVD-R (Digital Versatile Disc-Recordable), a DVD-R/W (Digital Versatile Disc-Rewritable), a semiconductor memory (e.g. a mask ROM, a PROM (Programmable ROM), an EPROM (Erasable PROM), a flash ROM, and a RAM (Random Access Memory)).

Further, the program may be supplied to a computer by various types of transitory computer readable media. Examples of the transitory computer readable medium include an electric signal, an optical signal, and an electromagnetic wave. The transitory computer readable medium may supply the program to a computer via a wired communication path such as an electric wire, an optical fiber, and the like or a wireless communication path.

Further, the above-described exemplary embodiments may be carried out in an appropriate combination thereof. Further, the present invention is not limited to the above-described exemplary embodiments and may be carried out in various modes.

### (Supplementary Notes)

A part or the whole of the above-described exemplary embodiments can be described as the following supplementary notes. However, the following supplementary notes are merely illustrative of the present invention, and the present invention is not limited to these cases.

### (Supplementary Note 1)

A radio communication system including:
a first user equipment that stores information for identifying a first communication operator for a first communication;
a second user equipment that stores information for identifying a second communication operator for a second communication; and
a base station,
the base station
executing the first communication and the second communication,
measuring a radio resource used in the base station, and
comparing,
when the measured radio resource exceeds a predetermined threshold value,
a control level of the base station with at least one of a control level of the first communication or a control level of the second communication,
the base station being configured to be able to control, on the basis of a result of the comparison, an audio encoding rate related to at least one of the first communication or the second communication.

### (Supplementary Note 2)

A base station of a radio communication system including a first user equipment that stores information for identifying a first communication operator for a first communication and a second user equipment that stores information for identifying a second communication operator for a second communication, the base station including:
a communication unit that executes the first communication and the second communication;
a measurement unit that measures a radio resource used in the communication unit;
a comparison unit that compares,
when the measured radio resource exceeds a predetermined threshold value,
a control level of the base station with at least one of a control level of the first communication or a control level of the second communication; and
a control unit configured to be able to control, on the basis of a result of the comparison, an audio encoding rate related to at least one of the first communication or the second communication.

### (Supplementary Note 3)

The base station according to Supplementary Note 2, wherein
the control of the audio encoding rate
is executed by rewriting an ECN (Explicit Congestion Notification) field included in packets of the first communication and the second communication.

### (Supplementary Note 4)

The base station according to Supplementary Note 3, wherein
in the rewrite,
the ECN field is rewritten from ECT(0) of ECT (ECN-Capable Transport) to CE (Congestion Experienced).

### (Supplementary Note 5)

The base station according to any one of Supplementary Notes 2 to 4, wherein
when the measured radio resource is lower than a second predetermined threshold value,
the control of the audio encoding rate in the control unit is stopped.

### (Supplementary Note 6)

The base station according to any one of Supplementary Notes 2 to 5, wherein
at least one of a control level of the base station, a control level of the first communication, or a control level of the second communication is variable depending on a time zone.

### (Supplementary Note 7)

The base station according to any one of Supplementary Notes 2 to 5, further including an input unit that receives a command from a first communication operator or a second communication operator, wherein
at least one of a control level of the base station, a control level of the first communication, or a control level of the second communication is variable depending on the command input to the input unit.

### (Supplementary Note 8)

The base station according to any one of Supplementary Notes 2 to 6, wherein
the first communication
is identified using a first PLMN (Public Land Mobile Network) identifier, and
the second communication
is identified using a second PLMN identifier.

### (Supplementary Note 9)

A user equipment configured to execute a first communication with a base station, the user equipment including:
a memory that stores information for identifying a first communication operator for the first communication;
a communication unit that receives control information of an audio encoding rate included in the first communication, the audio encoding rate being changed on the basis of a result of a comparison, wherein
a control level of the base station and a control level of the first communication are compared with each other when a radio resource used in the base station exceeds a predetermined threshold value; and
a processor that controls the audio encoding rate of the first communication on the basis of the received control information.

### (Supplementary Note 10)

A communication method of a base station of a radio communication system including
a first user equipment that stores information for identifying a first communication operator for a first communication, and
a second user equipment that stores information for identifying a second communication operator for a second communication, the communication method including:
   executing the first communication and the second communication;
   measuring a radio resource used in the base station;
   comparing,
   when the measured radio resource exceeds a predetermined threshold value,
   a control level of the base station with at least one of a control level of the first communication or a control level of the second communication; and
   controlling, on the basis of a result of the comparison, an audio encoding rate related to at least one of the first communication or the second communication.

### (Supplementary Note 11)

A program for causing a computer to execute a communication method of a base station of a radio communication system including a first user equipment that stores information for identifying a first communication operator for a first communication and a second user equipment that stores information for identifying a second communication operator for a second communication, the program causing the computer to execute:
a process for executing the first communication and the second communication;
a process for measuring a radio resource used in the base station;
a process for comparing;
when the measured radio resource exceeds a predetermined threshold value,
a control level of the base station with at least one of a control level of the first communication or a control level of the second communication; and
a process for controlling, on the basis of a result of the comparison, an audio encoding rate related to at least one of the first communication or the second communication.

### (Supplementary Note 12)

A base station of a communication system including
a first core network related to a first communication operator,
a second core network related to a second communication operator,
a first user equipment configured to be communicable with the first core network, and
a second user equipment configured to be communicable with the second core network, the base station including:
a communication unit that executes a first communication of the first user equipment with the first core network and a second communication of the second user equipment with the first core network;
a measurement unit that measures a radio resource used in the communication unit;
a comparison unit that compares, when the measured radio resource exceeds a predetermined threshold value, a control level of the base station with a control level of the first communication or a control level of the second communication; and
a control unit that controls, on the basis of a result of the comparison, an audio encoding rate related to at least one of the first communication or the second communication.

### (Supplementary Note 13)

A base station of a radio communication system including
a first user equipment that stores information for identifying a first communication operator related to a contract for a first communication, and
a second user equipment that stores information for identifying a second communication operator related to a contract for a second communication, the base station including:
   a communication unit that executes the first communication and the second communication;
   a measurement unit that measures a radio resource used in the communication unit;
   a comparison unit that compares,
   when the measured radio resource exceeds a predetermined threshold value,
   a control level of the base station with at least one of a control level of the first communication or a control level of the second communication; and
   a control unit configured to be able to control, on the basis of a result of the comparison, an audio encoding rate related to at least one of the first communication or the second communication.

### (Supplementary Note 14)

A storage medium that stores a program for causing a computer to execute a communication method of a base station of a radio communication system including a first user equipment that stores information for identifying a first communication operator for a first communication and a second user equipment that stores information for identifying a second communication operator for a second communication, the program causing the computer to execute:
a process for executing the first communication and the second communication;
a process for measuring a radio resource used in the base station;
a process for comparing;
when the measured radio resource exceeds a predetermined threshold value,
a control level of the base station with at least one of a control level of the first communication or a control level of the second communication; and
a process for controlling, on the basis of a result of the comparison, an audio encoding rate related to at least one of the first communication or the second communication.

This application is based upon and claims the benefit of priority from Japanese patent application No. 2014-179454, filed on September 3, 2014, the disclosure of which is incorporated herein in its entirety by reference.

### Reference signs List

- 1: User equipment
- 2: Base station
- 3: Core network
- 4: Virtual network
- 11: Memory
- 12: Processor
- 13: Communication unit
- 21: Measurement unit
- 22: Comparison unit
- 23: Control unit
- 24: Communication unit
- 100: User equipment
- 110: Memory
- 120: Radio connection processing unit
- 130: Call control processing unit
- 140: VoIP processing unit
- 150: Radio interface unit
- 200: Base station
- 210: Maintenance management unit
- 220: Call control processing unit
- 230: Transmission processing unit
- 240: Radio interface unit
- 300: Core network
- 310: S-GW
- 320: MME
- 330: P-GW
- 400: Virtual network

## Claims

1. A radio communication system including:
a first user equipment configured to store information for identifying a first communication operator for a first communication;
a second user equipment configured to store information for identifying a second communication operator for a second communication; and
a base station,
wherein the base station is configured to
execute the first communication and the second communication,
measure a radio resource used in the base station,
compare, when the radio resource exceeds a predetermined threshold value, a control level of the base station with at least one of a control level of the first communication or a control level of the second communication, and
control, based on a result of the comparison, an audio encoding rate related to at least one of the first communication or the second communication.

2. A base station for a radio communication system comprising a first user equipment that stores information for identifying a first communication operator for a first communication and a second user equipment that stores information for identifying a second communication operator for a second communication, the base station comprising:
a communication unit configured to execute the first communication and the second communication;
a measurement unit configured to measure a radio resource used in the communication unit;
a comparison unit configured to compare, when the radio resource exceeds a predetermined threshold value, a control level of the base station with at least one of a control level of the first communication or a control level of the second communication; and
a control unit configured to be able to control, based on a result of the comparison, an audio encoding rate related to at least one of the first communication or the second communication.

3. The base station according to claim 2,
wherein the control of the audio encoding rate is executed by rewriting an ECN (Explicit Congestion Notification) field included in packets of the first communication and the second communication.

4. The base station according to claim 3,
wherein in the rewrite, the ECN field is rewritten from ECT(0) of ECT (ECN-Capable Transport) to CE (Congestion Experienced).

5. The base station according to any one of claims 2 to 4,
wherein, when the radio resource is lower than a second predetermined threshold value, the control of the audio encoding rate in the control unit is stopped.

6. The base station according to any one of claims 2 to 5,
wherein at least one of a control level of the base station, a control level of the first communication, or a control level of the second communication is variable depending on a time zone.

7. The base station according to any one of claims 2 to 5, further comprising an input unit configured to receive a command from a first communication operator or a second communication operator,
wherein at least one of a control level of the base station, a control level of the first communication, or a control level of the second communication is variable depending on the command input to the input unit.

8. A user equipment configured to execute a first communication with a base station, the user equipment comprising:
a memory configured to store information for identifying a first communication operator for the first communication;
a communication unit configured to receive control information of an audio encoding rate included in the first communication, the audio encoding rate being changed based on a result of a comparison, wherein a control level of the base station and a control level of the first communication are compared with each other when a radio resource used in the base station exceeds a predetermined threshold value; and
a processor configured to control the audio encoding rate of the first communication based on the received control information.

9. A communication method for a base station of a radio communication system including a first user equipment that stores information for identifying a first communication operator for a first communication, and a second user equipment that stores information for identifying a second communication operator for a second communication, the communication method including:
executing the first communication and the second communication;
measuring a radio resource used in the base station;
comparing, when the measured radio resource exceeds a predetermined threshold value, a control level of the base station with at least one of a control level of the first communication or a control level of the second communication; and
controlling, based on a result of the comparison, an audio encoding rate related to at least one of the first communication or the second communication.

10. A storage medium that stores a program for causing a computer to execute a communication method of a base station of a radio communication system including a first user equipment that stores information for identifying a first communication operator for a first communication and a second user equipment that stores information for identifying a second communication operator for a second communication, the program causing the computer to execute:
a process for executing the first communication and the second communication;
a process for measuring a radio resource used in the base station;
a process for comparing, when the measured radio resource exceeds a predetermined threshold value, a control level of the base station with at least one of a control level of the first communication or a control level of the second communication; and
a process for controlling, based on a result of the comparison, an audio encoding rate related to at least one of the first communication or the second communication.
